# EUROPEAN PATENT SPECIFICATION

(11) **EP 1 562 067 B1**
(45) Date of publication and mention of the grant of the patent: **13.06.2007**
(21) Application number: 05250701.9
(22) Date of filing: 08.02.2005
(51) Int. Cl.: G02C 3/00, G02C 11/08, A63B 33/00

(54) **Eyewear**
Brille
Lunettes

(30) Priority: 09.02.2004 GB 0402772
(43) Date of publication of application: 10.08.2005
(73) Proprietor: Speedo International Limited, London W1U 3PH (GB)
(72) Inventor: Oishi, Mark, Burnaby, British Columbia V5J 4SG (CA); Speed, Daryl, Burnaby, British Columbia, V5J 4SG (CA)
(74) Representative: Stoner, Gerard Patrick

(56) References cited:
- EP-A- 1 287 857
- EP-A- 1 293 234
- WO-A-02/19013
- US-A- 4 405 212
- US-B1- 6 247 811
- US-B1- 6 550 110

## Description

This invention has to do with eyewear such as goggles, masks, glasses and spectacles. We particularly envisage use of the new ideas for swimming goggles.

In general terms eyewear can be regarded as having one or more eyepieces. Swimming goggles usually have two separate eyecups connected by a flexible or stiff nosebridge which may be length-adjustable. Typical racing goggles have small eyecups that seat inside the wearer's eye sockets. Larger goggles have a forwardly-directed lens - usually flat but it may be curved - surrounded by a frame structure with a rear-directed part shaped to contact against the face around the eyes, including along the brow, and which may have a flexible edge seal to keep water out. The lens portion and rear-directed frame/seal portion may be made up from discrete elements - usually so with larger goggles - or formed in one piece, e.g. as a moulding of plastics such as polycarbonate, usually for racing goggle eyecups.

By contrast a mask usually only has one lens piece with a single frame part, although this may have a narrow central region and indeed when the central region is sufficiently narrow these are effectively goggles.

The present proposals have to do with the way in which eyewear such as goggles is held on the face. For goggles and masks, the conventional means has been a strap extending around the back of the head and anchoring to anchor points at the lateral extremities of the eyepieces. The straps may be elastic, elastomeric or substantially inelastic; they may have length adjustment by elasticity and/or by means of the sliding buckles, adjusters and the like. Cords may be used. Spectacles and sunglasses normally have earpieces, with a hook part to secure the eyewear by hooking over the ear. Whichever the mode chosen, there are essentially some form of side retainers attaching to the one or more eyepieces of the eyewear somewhere near the front of the head, and extending back as a strap, cord or earpiece.

Document EP 1287857 describes a pair of swimming goggles comprising a pair of frames encircling respective lenses, and side retainers in the form of a strap.

Our general proposal now is to give the side retainer a forwardly branched form, with limbs of the side retainer connecting to the eyepiece at spaced upper and lower connection points. Preferably the vertical spacing of these connection points is at least 50% of the maximum vertical extent (distance between the highest and lowest contacts against the face) of the eyepiece as a whole. The connection points may be respectively adjacent to the top and bottom edges of the eyepiece. Preferably they are inward and/or forward of the lateral extremity of the eyepiece. The lower connection may be more medial than the upper, taking into account the more sloping contour of the face below the eye socket.

The use of this branched side retainer construction has a number of advantages, which vary from one kind of eyewear to another.

In general, there is an issue with eyewear that fits closely against the face (particularly goggles) of undesirably localised pressure on parts of the face when the eyewear is fastened on. Especially where the eyewear fastener is one that is tightened, i.e. where there is a persisting force along the side retainers urging the eyewear back against the face around the eye sockets, this force must be then balanced by the reaction against the face. The pattern of reaction of the face to this force against the eyepiece(s) is sensitive to the exact contours of the face, and affected by the significant sideways or circumferential direction of the pull from the fastener, especially with conventional transmission of the force through single fastener securements at lateral extremities of the eyepieces. With a branched connection as now proposed, the points of application of force from the fastener are distributed around the eyepiece(s). The eyepiece(s) can then more readily adjust its/their fit against the face to provide the necessary reaction, without so much concentration of forces (pressure) at those face surfaces which oppose a simple circumferential pull.

The better distribution of force also reduces leakage.

Preferably the connection of the limbs of the branched side retainer to the eyepiece is pivotable or flexible to facilitate even distribution of forces.

The branched side retainer may take various forms. Preferably there are two limbs, an upper and a lower, connecting respectively to upper and lower portions of the corresponding eyepiece. It is possible to have more limbs, e.g. a third, connecting to an intermediate point e.g. at or adjacent the lateral extremity of the eyepiece. The connections to the eyepiece can be essentially point connections (which may be pivotable as mentioned above), although one or more connection loci distributed around the lateral extremity of the eyepiece are possible; if only one, the upper and lower extremities of the connection can be assessed for the positional criteria mentioned above.

Preferably the connections of the side retainer limbs to the eyepiece are discrete joints, i.e. the limbs and eyepiece are not integral.

In a preferred form the branched side retainer is made from resilient plastics or metal. Its limbs are preferably bendable but substantially inextensible along their length. Preferably they diverge forwardly from a rear union. This rear union may have or carry a connection means, such as a hook, hole, clip or buckle, for a cord or strap to pass around the back of the head. Alternatively it may connect to or comprise an earpiece hook. A preferred branched connector is formed in one piece of plastics or metal, e.g. from tough engineering plastics such as nylon, nylon alloy or acetyl resin: these are strong and durable but light.

A preferred side retainer is in the form of a wishbone, moulded in one piece from a resilient plastics material and having two limbs diverging forwardly from a rear connector body. Each may have at its tip a connector for pivotable connection to an eyepiece. A suitable connection is by a rivet or stud, integral with a limb tip or passing through a hole in it, which snaps and/or bonds into a corresponding socket in the eyepiece. Or, a stud might be integral with the eyepiece. The rear connector body has a fastening means, such as a through-hole or hook for connection to a strap or cord to secure behind the head.

Desirably the limbs of the branched side retainer have substantially the same cross-sectional thickness along at least most of their length. A preferred limb length, e.g. between union and connection point in the above embodiment, is between 4 and 12 cm.

The branched connectors described can be flexible, but withstand tensile forces without significant stretching. This is valuable because for racing, a tight fit is necessary. With a conventional rubber strap long enough to extend right around the head, you need to take up a long tightening adjustment to get the necessary tension. It has been determined that straps are responsible for substantial drag. They are also rather dense. A branched connector as described, which can be made from plastics material, reduces these difficulties. Because it can occupy a significant circumferential length, the length of stretchable or otherwise adjustable strap is reduced: consequently the necessary take up of slack is reduced and a tight fit is more easily got. The strap may be elastomeric, elasticated cord or ordinary cord. It may be continuous, have a slide adjustment, be secured by a buckle, hook, clip or other tightening or fastening mechanism, or have free ends for tying.

While self-supporting (i.e. having a predetermined 3D shape when not under load) and non-elastomeric branched connectors have advantages, any branched side retainer can offer some advantage of force distribution. So, it is possible in other embodiments for the side retainer to be flaccid and/or elastomeric.

In preferred embodiments the side retainer connector as described above is used in conjunction with goggles having separate left and right eyecups, preferably racing goggles in which the eyecups are dimensioned to seat in the eye sockets. They may be one piece-moulded eyecups. Such eyecups may have a flat lens portion with a contoured surround extending back to meet the face at a contoured edge. The rearward edge of the surround forms a seal, and may carry or incorporate a deformable seal element to improve the seal and its comfort.

Our particularly preferred eyecup form for a racing goggle has a tapering lateral wing portion shaped to extend out to or beyond the lateral extremity of the wearer's eye socket and to the side of the head. This is an independently new feature in one-piece eyepiece cups, which conventionally sit right inside the eye socket. A lateral wing portion extending substantially to the side of the head can substantially reduce drag generated in that region. Our preferred wing portion is convex adjacent a boundary of the (flat) lens portion (which is preferably oval in outline) and extends convexly out to a tip, which in use lies close to the side of the head. As mentioned, this tip may connect to a further limb of a side retainer as defined previously.

An embodiment of our proposals is now described with reference to the attached drawings, in which:
Fig. 1 is a top view of racing swimming goggles;
Fig. 2 is a sectional view, at II-II of Fig. 1;
Figs. 3 and 4 are a perspective view and front view of the goggles;
Fig. 5 is a perspective view showing connections disengaged for clarity, and
Fig. 6 is a perspective view showing a strap fitted.

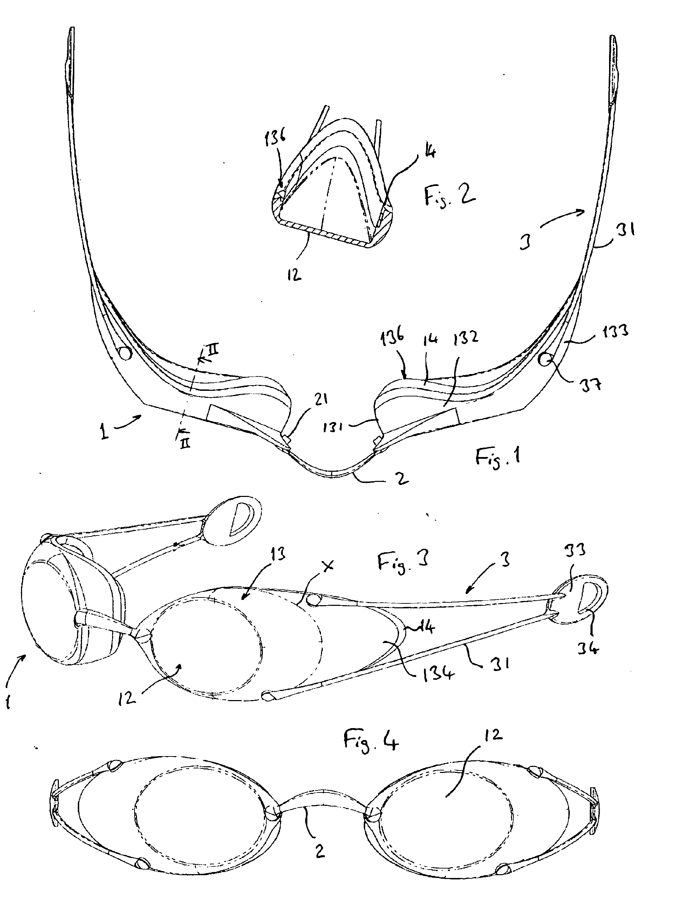

With reference to Figs. 1 to 3, racing goggles for swimmers have two separate one-piece eyecups 1 connected by a nosebridge 2. Respective wishbone frame elements 3 connect to the outer edges of the eyecups 1.

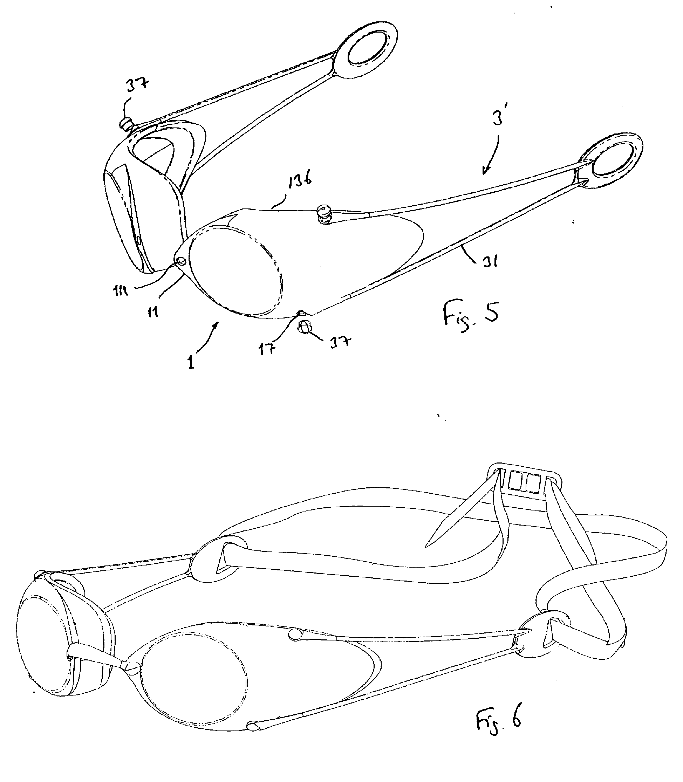

Each eyecup 1 is a one-piece moulded polycarbonate unit, having an oval front flat lens portion 12 through which the swimmer sees, and a convex contoured surround or frame portion 13 extending back from the lens portion 12 and having a rear edge 136 contoured to fit against the wearer's face inside the eye socket. For comfort and a closeness of fit, the rear edge carries a soft resilient seal pad 14. In this embodiment this is provided by injection-moulding a TPR or silicone gel onto a retaining step formation on the edge of the moulded polycarbonate unit - see Fig. 2. The contoured cup surround 13 has a medial part 131 which lies adjacent to the nose, extending round into upper and lower portions 132 and a lateral wing 133. This lateral wing 133 is a new and characteristic feature. Conventional one-piece cups have substantially the same amount of surround all the way around, extending straight back so that the lateral extremity terminates approximately at the dotted line X shown in Fig. 3. In the present design the lateral extremity sets out at a greater lateral inclination and is greatly extended by comparison with the other parts of the surround 13, to at least twice the length (measured from the edge of the lens portion 12) of any of the other surround parts. It extends in a tapering convex formation back to a rounded tip or point 134. When the goggles are worn, this tip 134 extends out at the lateral extremity of the eye socket and onto the side of the head by the temples, providing a fairing or drag-reducing effect at what would otherwise be a stepped shape.

Each eyecup 1 has a medial front lug 11 with a hole 111 to which the nosebridge 2 is attached by a stud 21. In the example a stiff plastics nosebridge (e.g. a one-piece moulding of nylon alloy resin) is shown. The user selects a nosebridge length that suits their face. This is one option. It is also possible to use other (e.g. conventional) adjustable nosebridges, which may be string or cord, or to use a nosebridge integrated with the eyepieces.

A particularly distinctive feature of the new goggles is the provision of wishbone connectors 3 connecting to the sides of the eyecups 1. These connectors 3 are one piece plastics mouldings of suitable tough engineering plastics e.g. nylon alloy or acetyl resin. Each connector has a rear connection union 33, provided in this embodiment by a small oval plate with a central hole 34. Two thin connection limbs 31 extend forward divergently from this rear union 33. Their distal ends have fastener portions 32 at which they are anchored directly to the moulded eyecup body. The upper and lower limbs anchor respectively into upper and lower anchorage points. These are positioned substantially at the height of the top and bottom of the lens portion respectively; this is also essentially at the top and bottom of the eyecup considered as a whole. As well as diverging up and down to these positions, the limbs 31 are moulded or preformed with an inwardly curved shape (see Fig. 1) so that their rear unions 33 lie close alongside the head while their distal limb portions curve around in front of the eye socket region. That is to say, they are preformed to conform to the head outline.

The fasteners used to anchor the limb tips 32 into the eyecup 1 may be chosen in accordance with materials used. In this version they are small rivets 37 snapped and/or bonded directly into corresponding sockets 17 moulded into the eyecups. See Fig. 5. They permit a degree of pivoting of the wishbone limb 31 around the connection, so that the arrangement can flex in use and avoid heavy stresses. These fastenings 32 may be permanent or releasable.

One factor in deciding the kind of fastener is that it may be desirable to have an interchangeable range of styles or types of components, e.g. eyecups 1, wishbone connectors 3 and nosebridges 2. As regards the eyecups, a user may want to select from possible variants of shape, size and tint. As regards the wishbone frames 3, a user may wish to select from variants of colour, length shape or rigidity. Nosebridges might be chosen for length, type or adjustability. A customer can choose from available component options which can then be connected together e.g. by the supplier or at a point of sale. These connections may be permanent, i.e. impossible or difficult to disassemble by the customer, or they may be made more readily releasable so the user can change the combination later if wished.

A flexible strap, e.g. a double latex strap 9 as shown in Fig. 6, is connected to the holes 34 in the wishbone elements.

When worn, the wishbone union 33 preferably lies close above the ear; the wishbone 3 distributes strap force as described previously improving comfort.

The illustrated construction is light in weight, comfortable to wear, low in drag and has a good appearance.

## Claims

1. Eyewear having at least one eyepiece (1), said at least one eyepiece comprising a forwardly-directed lens portion (12) and a rearwardly-directed frame portion (13) shaped to contact conformingly against the face around the eye or eyes in use, and left and right side retainers (3) which connect to said eyepiece or eyepieces at left and right lateral positions and in use engage with a wearer's head to hold the eyewear in position with said frame portions making said conforming contact against the face,
**characterised in that**
said respective side retainers (3) have a forwardly-branched form, with non-flaccid upper and lower limbs (31) connecting to said at least one eyepiece at spaced upper and lower connections (32,37).

2. Eyewear according to claim 1 in which said limbs (31) are of metal or moulded plastics.

3. Eyewear according to claim 1 or claim 2 in which each side retainer comprises a preformed branched body (3) comprising said upper and lower limbs (31) which meet at a rear union (33) of said branched body.

4. Eyewear according to claim 3 in which said rear union (33) has a connector (34) for a strap which connects in use between said left and right side retainers.

5. Eyewear according to any one of the preceding claims in which said side retainer limbs (31) have a preformed laterally convex curve, to conform around the side of the wearer's head.

6. Eyewear according to any one of the preceding claims in which said limbs (31) are from 4 to 12 cm long.

7. Eyewear according to any one of the preceding claims having left and right said eyepieces (1) connected by a nosebridge (2).

8. Eyewear according to claim 7 in which said eyepieces (1) are eyecups each comprising said lens portion (12) and frame portion (13) in a one-piece moulded entity shaped to seat down into the wearer's eye socket.

9. Eyewear according to any one of the preceding claims in which the rear edge of said frame portion carries a discrete deformable seal element (14).

10. Eyewear according to any one of claims 7 to 9 in which each eyecup (1) has a lateral wing portion (133) shaped to extend out beyond the lateral extremity of the wearer's eye socket and curve rearwardly onto the side of the wearer's head.

11. Eyewear according to any one of the preceding claims in which said upper and lower connections (32, 37) of said side retainer limbs (31) to said at least one eyepiece (1) are pivotable joints.

12. Eyewear according to any one of the preceding claims in which said upper and lower connections (32,37) are forward and medially inward of the lateral extremity of said at least one eyepiece (1).

13. Eyewear according to any one of the preceding claims in which said upper and lower connections (32,37) are respectively to the top and bottom of said eyepiece frame portion (13).

## Patentansprüche

1. Brille mit zumindest einem Okular (1), wobei das zumindest eine Okular einen nach vorne gerichteten Linsenabschnitt (12) und einen nach hinten gerichteten Rahmenabschnitt (13) umfasst, der zum übereinstimmenden Kontakt mit dem bei Verwendung um das Auge oder die Augen herum vorliegenden Gesicht ausgeformt ist, sowie linke und rechte Seitenhalterungen (3) umfasst, die mit dem Okular oder den Okularen an linken und rechten seitlichen Positionen verbunden sind und bei Verwendung mit dem Kopf eines Brillenträgers in Eingriff sind, um die Brille mit den Rahmenabschnitten in Position zu halten, welche den übereinstimmenden Kontakt mit dem Gesicht herstellen, **dadurch gekennzeichnet, dass**
die jeweiligen Seitenhalterungen (3) eine nach vorne verzweigte Form mit nichtschlaffen oberen und unteren Gliedern (31) aufweisen, die mit dem zumindest einen Okular an voneinander beabstandeten oberen und unteren Verbindungen (32, 37) verbunden sind.

2. Brille nach Anspruch 1, worin die Glieder (31) aus Metall oder Form-Kunststoff ausgebildet sind.

3. Brille nach einem der Ansprüche 1 oder 2, worin jede Seitenhalterung einen vorgefertigten verzweigten Körper (3) umfasst, der die oberen und unteren Glieder (31) umfasst, die an einer hinteren Verbindung (33) des verzweigten Körpers aufeinander stoßen.

4. Brille nach Anspruch 3, worin die hintere Verbindung (33) ein Verbindungsstück (34) für einen Bügel hat, der bei Verwendung die linke und die rechte Seitenhalterungen miteinander verbindet.

5. Brille nach einem der vorangegangenen Ansprüche, worin die Seitenhalterungsglieder (31) einen vorgefertigten, seitlich konvexen Bogen aufweisen, um sich um die Seite des Kopfes des Brillenträgers herum anzupassen.

6. Brille nach einem der vorangegangenen Ansprüche, worin die Glieder (31) von 4 bis 12 cm lang sind.

7. Brille nach einem der vorangegangenen Ansprüche mit linken und rechten Okularen (1), die durch eine Nasenbrücke (2) miteinander verbunden sind.

8. Brille nach Anspruch 7, worin die Okulare (1) Augenmuscheln sind, die jeweils den Linsenabschnitt (12) und den Rahmenabschnitt (13) in einer einstückig ausgebildeten Einheit umfassen, die zum Einsetzen in die Augenhöhle des Brillenträgers ausgeformt ist.

9. Brille nach einem der vorangegangenen Ansprüche, worin die hintere Kante des Rahmenabschnitts ein getrennt verformbares Dichtungselement (14) trägt.

10. Brille nach einem der Ansprüche 7 bis 9, worin jede Augenmuschel (1) einen seitlichen Flügelabschnitt (133) aufweist, der zum Hinausstrecken über das seitliche Ende der Augenhöhle des Brillenträgers hinaus und zum Biegen nach hinten auf die Seite des Kopfs des Brillenträgers ausgeformt ist.

11. Brille nach einem der vorangegangenen Ansprüche, worin die oberen und unteren Verbindungen (32, 37) der Seitenhalterungsglieder (31) mit dem zumindest einen Okular (1) schwenkbare Gelenke sind.

12. Brille nach einem der vorangegangenen Ansprüche, worin die oberen und unteren Verbindungen (32, 37) vom seitlichen Ende des zumindest einen Okulars (1) vorne und mittig nach innen ausgebildet sind.

13. Brille nach einem der vorangegangenen Ansprüche, worin die oberen und unteren Verbindungen (32, 37) jeweils an der Ober- und der Unterseite des Okularrahmenabschnitts (13) vorliegen.

## Revendications

1. Lunettes comportant au moins un oculaire (1), ledit au moins un oculaire comprenant une portion de lentille dirigée vers l'avant (12) et une portion de cadre dirigée vers l'arrière (13) configurées pour venir en contact, en s'adaptant, avec le visage autour de l'oeil ou des yeux en cours d'utilisation, et des éléments de retenue latéraux gauche et droit (3) qui sont reliés audit oculaire ou oculaires à des positions latérales gauche et droite et qui, en cours d'utilisation, viennent en prise avec la tête d'un utilisateur pour maintenir les lunettes en position, lesdites portions de cadre établissant ledit contact adapté avec le visage, **caractérisées en ce que**
les éléments de retenue latéraux respectifs (3) ont une forme branchée vers l'avant, avec des membres supérieur et inférieur non-flasques (31) reliés audit au moins un oculaire à des connexions supérieure et inférieure espacées (32, 37).

2. Lunettes selon la revendication 1, où lesdits membres (31) sont en métal ou en plastique moulé.

3. Lunettes selon la revendication 1 ou la revendication 2, où chaque élément de retenue latéral comprend un corps branché préformé (3) comprenant lesdits membres supérieur et inférieur (31) qui se rencontrent à une union arrière (33) dudit corps branché.

4. Lunettes selon la revendication 3, où ladite union arrière (33) présente un connecteur (34) pour une bande qui, en cours d'utilisation, établit une connexion entre lesdits éléments latéraux gauche et droit.

5. Lunettes selon l'une des revendications précédentes, où lesdits membres de retenue latéraux (31) ont une courbe préformée latéralement convexe, pour s'adapter autour du côté de la tête de l'utilisateur.

6. Lunettes selon l'une des revendications précédentes, où lesdits membres (31) ont une longueur de 4 à 12 cm.

7. Lunettes selon l'une des revendications précédentes, ayant des oculaires gauche et droit précités (1) reliés par un pont de nez (2).

8. Lunettes selon la revendication 7, où lesdits oculaires (1) sont des coques comprenant chacune ladite portion de lentille (12) et portion de cadre (13) dans une entité moulée en une pièce configurée pour se poser dans l'orbite de l'oeil de l'utilisateur.

9. Lunettes selon l'une des revendications précédentes, où le bord arrière de ladite portion de cadre porte un élément d'étanchéité discret déformable (14).

10. Lunettes selon l'une des revendications 7 à 9, où chaque coque (1) présente une portion d'ailette latérale (133) configurée pour s'étendre au-delà de l'extrémité latérale de l'orbite de l'oeil de l'utilisateur et courbée vers l'arrière sur le côté de la tête de l'utilisateur.

11. Lunettes selon l'une des revendications précédentes, où lesdites connexions supérieure et inférieure (32, 37) desdits membres de retenue latéraux (31) audit au moins un oculaire (1) sont des joints pivotants.

12. Lunettes selon l'une des revendications précédentes, où lesdites connexions supérieure et inférieure (32, 37) sont à l'avant et médialement vers l'intérieur de l'extrémité latérale dudit au moins un oculaire (1).

13. Lunettes selon l'une des revendications précédentes, où lesdites connexions supérieure et inférieure (32, 37) s'étendent respectivement jusqu'au-dessus et au fond de ladite portion de cadre (13) de l'oculaire.
